Europäisches Patentamt

European Patent Office

Office européen des brevets

(19)

(11) Publication number: **0 308 118**
**A2**

# EUROPEAN PATENT APPLICATION

(12)

(21) Application number: **88308224.0**

(51) Int. Cl.⁴: **H02G 1/12**

(22) Date of filing: **06.09.88**

(30) Priority: **12.09.87 GB 8721506**

(43) Date of publication of application:
**22.03.89 Bulletin 89/12**

(84) Designated Contracting States:
**AT BE CH DE ES FR GB GR IT LI LU NL SE**

(71) Applicant: **ABECO LIMITED**
**Unit 56 The Pensnett Estate**
**Kingswinford West Midlands DY6 7PP(GB)**

(72) Inventor: **Watts, John Malcolm**
**26 Prosper Meadow The Village**
**Kingswinford West Midlands(GB)**

(74) Representative: **Hands, Horace Geoffrey et al**
**GEORGE FUERY & CO Whitehall Chambers**
**23 Colmore Row**
**Birmingham B3 2BL(GB)**

(54) **Cable stripper.**

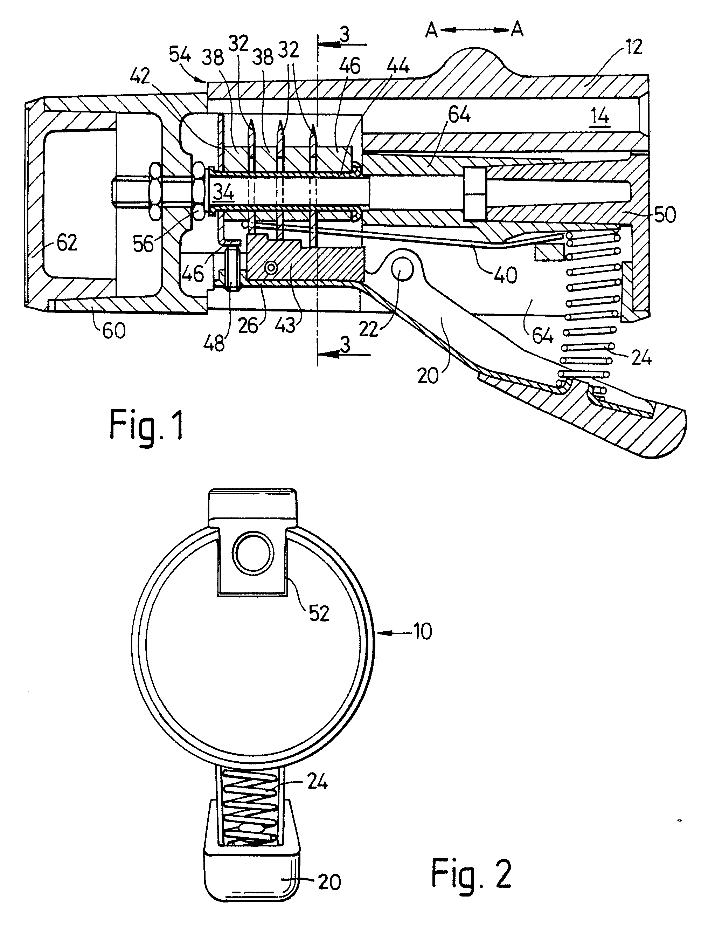

(57) A dedicated cable stripper for coaxial cable has a set of parallel cutter laminae (Figure 1) assembled to a carrier mounted on a pin. The laminae are slotted to be movable transversely of the pin. A spring loaded lever is to drive the cutters towards a cable guide parallel to the pin with an interposed wedge controlling depth of cut. The laminae are separated by spacers. The manufacturer chooses spacers, wedge and cable bore to suit the required cable/terminal combination.

Fig. 1

EP 0 308 118 A2

## CABLE STRIPPER

This invention relates to cable strippers of the kind adapted for use on coaxial cables and comprising a plurality of cutters which can be moved to cut into the cable for different depths, and so that by causing relative rotation between the cutters and the cable the successive layers of insulation, screen and the like can be peripherally severed and then axially displaced off the cable.

It is usual to provide adjustment of the individual cutters, at least as to depth of cut, and possibly also axial position along the cable, so that a stripper tool can be used with a wide range of cable sizes and terminal fittings: however, these strippers are often used by semi-skilled operators in line production, when adjustment of the tool is either not wanted or is a positive disadvantage since it may result in the tool being wrongly adjusted. However, manufacture of dedicated strippers, designed for particular cable/terminal combinations is uneconomic because of many different combinations in the wide range of parts needed therefor. The object of the present invention is to provide an improved dedicated stripper which is capable of being varied by the manufacturer according to requirements, from a small range of parts, so as to be economic in production.

According to the invention a coaxial cable stripper comprises a body provided with a guide to receive the cable, a plurality of cutters located in parallel planes perpendicular to the axis of said guide, a member for displacing the cutters in said planes normal to said axis, and an abutment stop controlling the displacement of the cutters by the member.

Preferably the cutters are thin laminae separated by spacers which dictate the axial spacing of the cuts and the cutters and spacers are apertured and threaded on a tubular carrier as a sub-assembly. The manufacturer selects different spacers to suit requirements.

Preferably the laminae are slotted so as to be movable transversely of said carrier, and an abutment wedge may be located between the cutters and the member so that the depth of cut is controlled by the thickness of the wedge at the various contact points with individual blades. This enables substantially identical blades to be used for any purpose, and by providing a small range of different wedges, different depths of cut can be accommodated.

The member which displaces the cutters may be a lever which is spring urged to drive the cutters into the cable, the lever being manually displaced against the spring to withdraw the cutters for example when inserting a new cable for treatment. Alternatively the member could be a sliding member which itself forms a cam or cooperates with a cam on the wedge, or both, so that as the member slides progressively along the tool in one direction it drives the cutters into the cable.

Preferably the cable guide is a bore in a block assembled to the stripper body, and then a common body may be used with different guides according to the cable to be treated.

The invention is now more particularly described with reference to the accompanying drawings wherein:-

Figure 1 is a sectional elevation of a stripper according to the invention;

Figure 2 is an end view;

Figure 3 is a sectional elevation on the line 3 - 3 of Figure 1 on an enlarged scale.

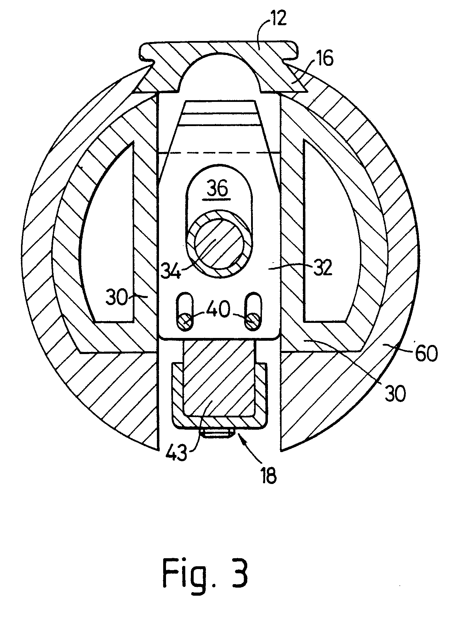

Turning now to the drawings, the cutters sub-assembly comprises a plurality of lamina 32 separated by spacers 38 and associated with a cable end stop 42 all assembled to a carrier tube 44. The laminae may be all identical, and have elongate slots 36, Figure 3. Hence the only variation in this sub-assembly is (usually) the thickness of the spacers. The manufacturer will select these according to requirements of the terminal fitting which is to be attached to the cable after it has been stripped. The carrier tube length is made up with a packing piece 46. The carrier tube has its ends peened out to hold the assembly together. End stop 42 is a close fit on the carrier and provides abutment 46 contacted by screw 48 carried by operating lever 20: hence adjustment of the screw controls the spring 24 driven movement of the lever about its pivot 20 and hence the extent to which the cutter blades are driven towards cable guide bore 14. However in normal use the screw will be adjusted empirically until satisfactory cuts are made and will then not need to be adjusted unless a different batch of cable varies slightly in its effective diameters.

Individual variation of depth of cut of the laminae into the cable is provided by spacer wedge 43 which is stepped. Hence the manufacturer will provide a series of different step wedges to suit different cables and select the one required in assembly. The spacer wedge is fixed to the lever.

Alternatively, step wedge 43 can be replaced with a block carrying a series of separate adjuster screws, one for each blade, and then screw 48 could be omitted.

Cable guide 12 is formed with bore 14 of a diameter to suit cables within a narrow range of sizes. The guide has a dovetail section (Figure 3) to retain and locate it in the body of the tool in sliding fashion. It is made non-detachable, that is the sliding is limited, by an end plug 50 secured to the tool body having a slot 52 cooperating with an end of the guide and of a different shape and narrower width than the dovetail. Sliding movement of the guide is to withdraw end 54 (Figure 1) from the region of the cutters to allow stripped sheaths to be removed from the tool as more particularly explained hereinafter.

The carrier 44 is made fast with a bolt 34 mounted in and extending along the body, by means of a nut 56 or a circlip which serves to locate the blades and end stop axially. A further nut 58 holds a first part 60 of a body extension and is completed by an end cap 62. Body part 60 extends around the area of the blades, being slotted diametrically to accommodate the guide 12 and lever 20 as seen in Figure 3, and fitting about bifurcations 30 formed in the end of body part 64 which carries the bolt 48 and the pin 22 pivoting the lever 20.

A hairpin spring 40 is trapped in the body part 64 and threaded through further laminae slots, Figure 3, and serves to hold those laminae fully retracted against the spacer wedge 43 at all times.

In use, the appropriate cable is inserted into bore 14 and pushed up as far as the end stop 42, and for this purpose the lever 20 is pivoted against the spring 24 so as to displace the cutter lamina out of the space to be occupied by the cable. Because the end stop is fixed in position on the carrier tube it remains in place when the laminae are displaced on the tube.

The lever is then released so as to be spring driven (spring 24) to take the cutters into contact with the cable. The cable and tool are relatively rotated and during this time the cutters will be further spring driven until the abutment screw 48 carried by the lever contacts the abutment stop 46. The various cutters will then have completed their travel through the successive layers of the cable, and possibly after a further turn to complete the encircling cuts, the cable is pulled out of the tool leaving the stripped sheaths behind. Cable guide 12 is slid axially to displace the end 54 past the laminae and enable the stripped sheaths to be removed.

In a modification, not shown, the body 60 has a second dovetail groove like that to receive the part 12, but diametrically related. The part 26 is then a swinging arm on pivot 22 but not a lever. Spring 24 is also omitted. A block slides in the second groove and cooperates with the part 26 (or directly with the wedge 43), and there is a cam function involved due to the faces of the block or the part 26 or wedge 43, or both, so that as the block moves from right to left in Figure 1 the cutters are displaced further into the cable until the abutment stop prevents further movement.

## Claims

1. A coaxial cable stripper comprising a body provided with a guide to receive the cable, a plurality of cutters located in parallel planes perpendicular to the axis of said guide, a member for displacing the cutters in said planes normal to said axis, and an abutment stop controlling the displacement of the cutters by the member.

2. A stripper as claimed in Claim 1 wherein the cutters are thin lamina separated by spacers which dictate the axial spacing of the cuts, and the cutters and spacers are apertured and threaded on a tubular carrier as a sub-assembly.

3. A stripper as claimed in Claim 2 wherein the laminae are slotted so as to be movable transversely of said carrier, and an abutment wedge is located between the cutters and the member, so that the depth of cut is controlled by the thickness of the wedge at the various contact points with the individual blades.

4. A stripper as claimed in any preceding claim wherein said guide is a bore in a block assembled to the stripper body.

5. A stripper as claimed in Claim 4 wherein the block is slidable for a limited distance to withdraw from the zone of the cutters and allow ejection of the stripped material.

6. A stripper as claimed in any preceding claim wherein the said abutment stop is adjustable to control the depth of cut.

7. A stripper as claimed in any of Claims 1-6 where the member is a pivoted lever, spring urged to drive the cutters into the cable.

8. A stripper as claimed in any of Claims 1-6 wherein the member is a sliding block and the cutters are cammed into the cable by the sliding movement.

9. A coaxial cable stripper substantially as described with reference to the accompanying drawings.

## Fig.1

## Fig. 2

Fig. 3